# EUROPÄISCHE PATENTSCHRIFT

(11) **EP 4 413 288 B1**
(45) Veröffentlichungstag und Bekanntmachung des Hinweises auf die Patenterteilung: **23.07.2025**
(21) Anmeldenummer: 22718620.2
(22) Anmeldetag: 25.03.2022
(51) Int. Cl.: F16L 25/14, F16L 37/091

(54) **VERBINDUNGSVORRICHTUNG ZUR VERBINDUNG VON LEITUNGSFÖRMIGEN BAUTEILEN**
CONNECTION DEVICE FOR CONNECTING TUBULAR COMPONENTS
DISPOSITIF DE RACCORDEMENT POUR RACCORDER DES ÉLÉMENTS TUBULAIRES

(30) Priorität: 05.10.2021 AT 507962021
(43) Veröffentlichungstag der Anmeldung: 14.08.2024
(73) Patentinhaber: EISELE GmbH, 71332 Waiblingen (DE)
(72) Erfinder: PFEIL, Patrick, 71394 Kernen im Remstal (DE); GEHRING, Sebastian, 71384 Weinstadt (DE)
(74) Vertreter: Burger, Hannes Alfred
(86) Internationale Anmeldenummer: PCT/EP2022/057884
(87) Internationale Veröffentlichungsnummer: WO 2023/057095

(56) Entgegenhaltungen:
- EP-A2- 0 379 655
- DE-A1- 3 405 229
- DE-B3- 102004 046 548
- DE-T2- 69 521 291
- US-A- 2 857 176

## Beschreibung

Die Erfindung betrifft eine Verbindungsvorrichtung zur Verbindung von zur Führung eines Strömungsmediums geeigneten leitungsförmigen Bauteilen wie Druckmittelschläuche, Druckmittelleitungen oder dergleichen miteinander oder mit anderen Bauelementen.

Mit derartigen Verbindungsvorrichtungen werden vor allem in der Pneumatik druckmittelführende Druckmittelschläuche oder Druckmittelleitungen oder dergleichen untereinander verbunden oder an andere pneumatische Bauelemente wie Arbeitszylinder, Ventile, Manometer oder dergleichen angeschlossen.

Eine gattungsgemäße Verbindungsvorrichtung ist beispielsweise aus der EP0379655A2 bekannt.

Die aus der EP0379655A2 bekannte Verbindungsvorrichtung weist den Nachteil auf, dass Druckmittelschläuche nur unzureichend gehalten werden können.

Weitere Verbindungsvorrichtungen sind aus der DE 10 2004 046548 B3, der EP 0 379 655 A2, der DE 695 21 291 T2, der DE 34 05 229 A1 und der US 2 857 176 A bekannt.

Aufgabe der vorliegenden Erfindung war es, die Nachteile des Standes der Technik zu überwinden und eine verbesserte Verbindungsvorrichtung anzugeben.

Diese Aufgabe wird durch eine Verbindungsvorrichtung gemäß den Ansprüchen gelöst.

Erfindungsgemäß ist eine Verbindungsvorrichtung zur Verbindung von zur Führung eines Strömungsmediums geeigneten leitungsförmigen Bauteilen miteinander oder mit anderen Bauelementen ausgebildet. Die Verbindungsvorrichtung umfasst:
- einen Grundkörper mit einem Schlauchaufnahmebereich, wobei im Schlauchaufnahmebereich ein Dichtungsaufnahmebereich ausgebildet ist und wobei im Schlauchaufnahmebereich ein Spannzangenaufnahmebereich ausgebildet ist;
- eine Spannzange mit einer Anschlussöffnung zur Aufnahme eines leitungsförmigen Bauteils, wobei die Anschlussöffnung einen Anschlussöffnungsdurchmesser aufweist, wobei die Spannzange mehrere über den Umfang verteilt ausgebildete elastisch federnde Spannelemente aufweist, wobei die Spannzange relativ zum Grundkörper in Axialrichtung verschiebbar im Spannzangenaufnahmebereich aufgenommen ist, wobei die Spannelemente durch Axialverschiebung der Spannzange relativ zum Grundkörper in Radialrichtung verlagerbar sind;
- ein Dichtungselement, welches im Dichtungsaufnahmebereich angeordnet ist und zur Abdichtung zwischen dem leitungsförmigen Bauteil und dem Grundkörper dient.

Die Verbindungsvorrichtung ist zur Aufnahme von leitungsförmigen Bauteilen mit unterschiedlichen Leitungsdurchmessern ausgebildet.

Die erfindungsgemäße Verbindungsvorrichtung bringt den Vorteil mit sich, dass für leitungsförmige Bauteile mit einem unterschiedlichen Leitungsdurchmesser nur eine einzelne Art von Verbindungsvorrichtungen benötigt wird. Somit kann die Anzahl von unterschiedlich benötigten Verbindungsvorrichtungen vermindert werden, wodurch insgesamt die Fertigung von Verbindungsvorrichtungen verbessert werden kann, da nur eine geringere Anzahl von unterschiedlichen Werkzeugen zur Fertigung der Verbindungsvorrichtungen benötigt wird. Dies wiederum führt dazu, dass die Qualität der Verbindungsvorrichtungen verbessert werden kann. Weiters kann durch die erfindungsgemäße Verbindungsvorrichtung die Aufnehmbarkeit von leitungsförmigen Bauteilen mit unterschiedlichen Leitungsdurchmessern verbessert werden, wodurch fertigungsbedingte Durchmesserungenauigkeiten ausgeglichen werden können.

Weiters kann es zweckmäßig sein, wenn im Grundkörper ein erster Axialanschlag ausgebildet ist, welcher eine erste zylindrische Mantelfläche mit einem ersten Axialanschlagdurchmesser aufweist und ein zweiter Axialanschlag ausgebildet ist, welcher eine zweite zylindrische Mantelfläche mit einem zweiten Axialanschlagdurchmesser aufweist. Dies bringt den Vorteil mit sich, dass eine erste Art des leitungsförmigen Bauteiles mit einem ersten Leitungsdurchmesser am ersten Axialanschlag angeschlagen werden kann und somit in ihrer Einsteckposition definiert ist und dass eine zweite Art von leitungsförmigen Bauteilen mit einem zweiten Leitungsdurchmesser am zweiten Axialanschlag angeschlagen werden kann und somit im gesteckten Zustand eine unterschiedliche Axialposition einnehmen kann. Somit kann einerseits der Todraum im Bereich des Axialanschlages außerhalb des leitungsförmigen Bauteiles möglichst geringgehalten werden. Darüber hinaus können durch diese Maßnahme leitungsförmige Bauteile mit einem geringeren Leitungsdurchmesser weiter in die Verbindungsvorrichtung eingesteckt werden als leitungsförmige Bauteile mit einem größeren Leitungsdurchmesser. Somit kann die erforderliche Auszugsfestigkeit auch für leitungsförmige Bauteile mit kleinen Leitungsdurchmessern erreicht werden.

Ferner kann vorgesehen sein, dass der erste Axialanschlag eine erste Stirnfläche aufweist und der zweite Axialanschlag eine zweite Stirnfläche aufweist, wobei die erste Stirnfläche und die zweite Stirnfläche in Axialrichtung in einem Stirnflächenabstand zueinander beabstandet angeordnet sind. Durch diese Maßnahme kann eine unterschiedliche Einstecktiefe für unterschiedliche leitungsförmige Bauteile mit unterschiedlichen Leitungsdurchmessern erreicht werden.

Darüber hinaus kann vorgesehen sein, dass der zweite Axialanschlagdurchmesser zwischen 87% und 99,9%, insbesondere zwischen 92% und 98%, bevorzugt zwischen 93,5% und 94,5% des Anschlussöffnungsdurchmessers beträgt. Dies bringt den Vorteil mit sich, dass jede Art von leitungsförmigen Bauteilen, welche einen unterschiedlichen Leitungsdurchmesser aufweist, einen festen Sitz in der Verbindungsvorrichtung aufweisen kann. Insbesondere kann vorgesehen sein, dass der Anschluss-Öffnungsdurchmesser 6,35 mm beträgt und eine Toleranz von +/- 0,1 mm aufweist. Weiters kann vorgesehen sein, dass der erste Axialanschlagdurchmesser gleich groß ausgebildet ist wie der Anschlussöffnungsdurchmesser. Somit kann auch der erste Axialanschlagdurchmesser 6,35 mm mit einer Toleranz von 0,1 mm betragen. Weiters kann vorgesehen sein, dass der zweite Axialanschlagdurchmesser 6 mm mit einer Toleranz von +-/ 0,1 mm beträgt.

Vorteilhaft ist auch eine Ausprägung, gemäß welcher vorgesehen sein kann, dass der erste Axialanschlag eine erste Axialanschlagslängenerstreckung aufweist und dass der zweite Axialanschlag eine zweite Axialanschlagslängenerstreckung aufweist, wobei die erste Axialanschlagslängenerstreckung zwischen 90% und 110%, insbesondere zwischen 95% und 105%, bevorzugt zwischen 98% und 102% der zweiten Axialanschlagslängenerstreckung beträgt. Dies bringt den Vorteil mit sich, dass sowohl ein erstes leitungsförmiges Bauteil mit einem ersten Leitungsdurchmesser, als auch ein zweites leitungsförmiges Bauteil mit einem zweiten Leitungsdurchmesser mit einem festen Sitz in der Verbindungsvorrichtung aufgenommen werden kann.

Gemäß einer Weiterbildung ist es möglich, dass das Dichtungselement einen Dichtungselementdurchmesser aufweist, wobei der Dichtungselementdurchmesser zwischen 25% und 55%, insbesondere zwischen 30% und 45%, bevorzugt zwischen 37% und 43% des Anschlussöffnungsdurchmessers beträgt. Besonders ein derartiges Durchmesserverhältnis bringt den überraschenden Vorteil mit sich, dass unterschiedliche leitungsförmige Bauteile mit unterschiedlichen Leitungsdurchmessern sicher und effizient in der Verbindungsvorrichtung gehalten werden können. Darüber hinaus kann durch diese Maßnahme eine überraschend gute Abdichtung beim Einsatz von unterschiedlichen leitungsförmigen Bauteilen mit unterschiedlichen Leitungsdurchmessern erreicht werden. Insbesondere kann vorgesehen sein, dass das Dichtungselement einen Dichtungselementdurchmesser zwischen 2,3 mm und 2,7 mm, insbesondere 2,5 mm aufweist.

Ferner kann es zweckmäßig sein, wenn das Dichtungselement eine Härte zwischen 30 Shore-A und 75 Shore-A, insbesondere zwischen 40 Shore-A und 60 Shore-A, bevorzugt zwischen 47 Shore-A und 53 Shore-A aufweist. Durch diese Maßnahme kann eine überraschend gute Abdichtung beim Einsatz von unterschiedlichen leitungsförmigen Bauteilen mit unterschiedlichen Leitungsdurchmessern erreicht werden.

Darüber hinaus kann vorgesehen sein, dass die erste Stirnfläche in einem ersten Winkel zu einer Mittelachse angeordnet ist und dass die zweite Stirnfläche in einem zweiten Winkel zur Mittelachse angeordnet ist, wobei der erste Winkel und/oder der zweite Winkel zwischen 30° und 89°, insbesondere zwischen 30° und 70°, bevorzugt zwischen 40° und 60° beträgt. Dies bringt den Vorteil mit sich, dass ein fester Sitz von unterschiedlichen leitungsförmigen Bauteilen mit unterschiedlichen Leitungsdurchmessern in der Verbindungsvorrichtung erreicht werden kann.

Weiters kann vorgesehen sein, dass das Dichtungselement einen Dichtungselementdurchmesser aufweist und dass der Dichtungsaufnahmebereich eine Dichtungsaufnahmehöhe aufweist, wobei die Dichtungsaufnahmehöhe zwischen 50% und 90%, insbesondere zwischen 65% und 85%, bevorzugt zwischen 75% und 80% des Dichtungselementdurchmessers beträgt. Dies bringt den überraschenden Vorteil mit sich, dass unterschiedliche leitungsförmige Bauteile mit unterschiedlichen Leitungsdurchmessern mit ausreichender Dichtheit in der Verbindungsvorrichtung gehalten werden können.

Weiters kann vorgesehen sein, dass eine Spannschräge einen Spannschrägenöffnungswinkel zwischen 10° und 45°, insbesondere zwischen 12° und 30°, bevorzugt zwischen 14° und 20° aufweist. Wenn die Spannschräge einen Spannschrägenöffnungswinkel im angegebenen Bereich aufweist, kann erreicht werden, dass unterschiedliche leitungsförmige Bauteile mit unterschiedlichen Leitungsdurchmessern in der Verbindungsvorrichtung aufgenommen werden können, wobei bei den unterschiedlichen Leitungsdurchmessern eine ausreichende Klemmwirkung durch die Fixiernasen erreicht werden kann. Bei einer derart ausgebildeten Spannschräge können gleichzeitig die Fixiernasen ausreichend weit auseinander gedrückt werden, um unterschiedliche leitungsförmige Bauteile mit unterschiedlichen Leitungsdurchmessern zum Entfernen aus der Verbindungsvorrichtung freizugeben.

Darüber hinaus kann vorgesehen sein, dass ein Spannzangenöffner ausgebildet ist, welcher mit den Spannelementen korrespondiert, wobei der Spannzangenöffner relativ zur Spannzange verschiebbar ist und wobei der Spannzangenöffner einen Betätigungsbereich aufweist, welcher zur Anlage an einer Öffenschräge der Spannelemente ausgebildet ist. Dies bringt den Vorteil mit sich, dass mittels des Spannzangenöffners ein vereinfachtes Lösen des leitungsförmigen Bauteiles erreicht werden kann. Insbesondere kann die Spannzange dadurch geöffnet werden, dass der Spannzangenöffner in Richtung zur Spannzange verschoben wird, wobei der Betätigungsbereich an der Öffenschräge der Spannelemente anliegt und diese auseinander drückt. Besonders durch den Spannzangenöffner können unterschiedliche leitungsförmige Bauteile mit unterschiedlichen Leitungsdurchmessern vereinfacht in der Verbindungsvorrichtung aufgenommen werden bzw. wieder aus der Verbindungsvorrichtung entfernt werden.

Weiters kann vorgesehen sein, dass der Führungsbereich an einem vom Spannzangenöffner abgewandten Längsende eine zur Mittelachse gezogene Kröpfung aufweist. Durch die Kröpfung kann eine Verliersicherung des Spannzangenöffners erreicht werden. Insbesondere kann vorgesehen sein, dass die Kröpfung formschlüssig am Grundkörper der Verbindungsvorrichtung zur Anlage kommt, wenn der Spannzangenöffner in Axialrichtung zum Grundkörper verschoben wird.

Weiters kann vorgesehen sein, dass der Spannzangenöffner eine erste Stirnwand aufweist, welche den Führungsbereich mit dem Betätigungsbereich verbindet. Dies bringt einen vereinfachten Aufbau des Spannzangenöffners mit sich. Insbesondere kann vorgesehen sein, dass der Führungsbereich und der Betätigungsbereich zusammen mit der ersten Stirnwand im Längsschnitt gesehen U-Förmig ausgebildet sind.

Die Shore-A härte wird nach dem in der DIN ISO 7619-1 genormten Messverfahren bestimmt.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes Ausführungsbeispiel einer Verbindungsvorrichtung zur Verbindung von zur Führung eines Strömungsmediums geeigneten leitungsförmigen Bauteilen mit anderen Bauelementen;
- Fig. 2: ein zweites Ausführungsbeispiel einer Verbindungsvorrichtung zur Verbindung von zur Führung eines Strömungsmediums geeigneten leitungsförmigen Bauteilen miteinander;
- Fig. 3: ein drittes Ausführungsbeispiel einer Verbindungsvorrichtung zur Verbindung von zur Führung eines Strömungsmediums geeigneten leitungsförmigen Bauteilen mit anderen Bauelementen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

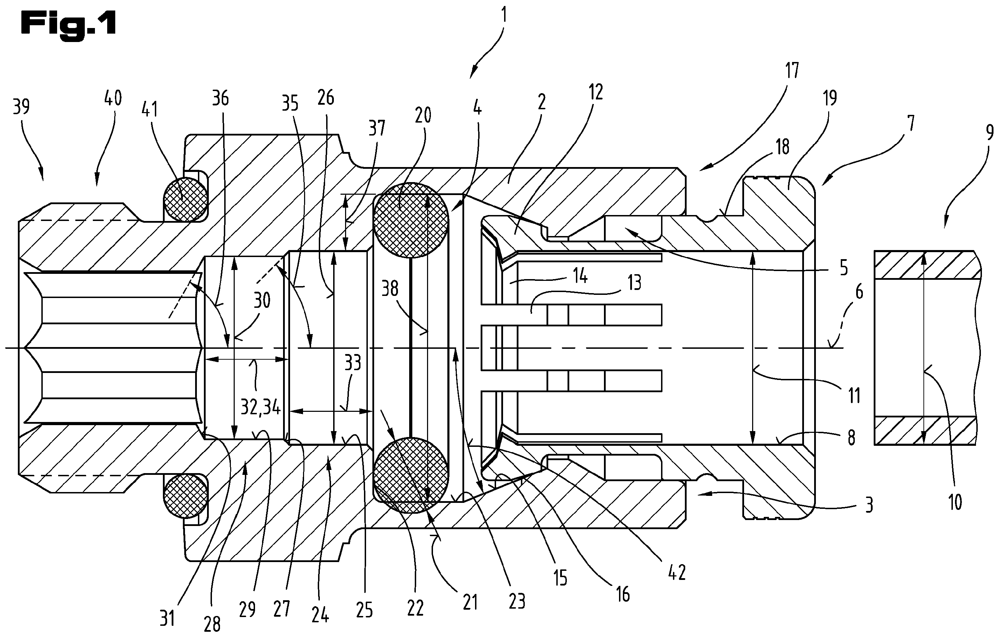

Fig. 1 zeigt ein erstes Ausführungsbeispiel einer Verbindungsvorrichtung 1 in einer Längsschnittdarstellung.

Wie aus Fig. 1 ersichtlich, kann vorgesehen sein, dass die Verbindungsvorrichtung 1 einen Grundkörper 2 umfasst. Der Grundkörper 2 kann einen Schlauchaufnahmebereich 3 aufweisen. Der Schlauchaufnahmebereich 3 kann einen Dichtungsaufnahmebereich 4 aufweisen. Darüber hinaus kann vorgesehen sein, dass im Schlauchaufnahmebereich 3 ein Spannzangenaufnahmebereich 5 ausgebildet ist. Insbesondere kann vorgesehen sein, dass der Grundkörper 2 im Schlauchaufnahmebereich rotationssymmetrisch um eine Mittelachse 6 ausgebildet ist.

Der Spannzangenaufnahmebereich 5 kann zur Aufnahme einer Spannzange 7 dienen. Insbesondere kann vorgesehen sein, dass die Spannzange 7 eine Anschlussöffnung 8 zur Aufnahme eines leitungsförmigen Bauteils 9 aufweist. Das leitungsförmige Bauteil 9 kann einen Leitungsdurchmesser 10 aufweisen. Insbesondere können unterschiedliche leitungsförmige Bauteile 9 mit unterschiedlichen Leitungsdurchmessern 10 in die erfindungsgemäß ausgebildete Verbindungsvorrichtung 1 eingesteckt sein. In einer speziellen Ausführungsform kann vorgesehen sein, dass der Leitungsdurchmesser 10 zwischen 5,9 mm und 6,45 mm betragen kann.

Die Anschlussöffnung 8 kann einen Anschlussöffnungsdurchmesser 11 aufweisen. Der Anschlussöffnungsdurchmesser 11 kann 6,55 mm betragen.

Weiters kann vorgesehen sein, dass die Spannzange 7 ein oder mehrere über den Umfang verteilte Spannelemente 12 aufweist, welche zur axialen Fixierung des leitungsförmigen Bauteiles 9 in der Verbindungsvorrichtung 1 dienen können. Insbesondere kann vorgesehen sein, dass die Spannelemente 12 über den Umfang gesehen segmentförmig ausgebildet sind, wobei zwischen den einzelnen Spannelementen 12 ein Spannelementfreiraum 13 ausgebildet sein kann. Die Spannelemente 12 können darüber hinaus jeweils eine Fixiernase 14 aufweisen. Die Fixiernase 14 kann gegenüber der Anschlussöffnung 8 derart nach innen vorragend ausgebildet sein, dass sie sich im leitungsförmigen Bauteil 9 verkrallen kann.

Weiters kann vorgesehen sein, dass die Spannelemente 12 in Radialrichtung elastisch federnd ausgebildet sind und somit die Fixiernase 14 in der Radialrichtung in das leitungsförmige Bauteil 9 eingedrückt werden kann. Insbesondere kann vorgesehen sein, dass im Spannzangenaufnahmebereich 5 eine Spannschräge 15 ausgebildet ist. Die Spannschräge 15 kann zu einem ersten Längsende 17 des Grundkörpers 2 hin konusförmig verjüngend ausgebildet sein. Mit der Verjüngung korrespondierend kann das Spannelement 12 eine Spannelementschräge 16 aufweisen. Die Spannelementschräge 16 des Spannelementes 12 kann an der Spannschräge 15 anliegen.

Wenn die Spannzange 7 in Richtung des ersten Längsendes 17 verschoben wird, können durch die Spannschräge 15 die Spannelemente 12 nach innen gedrückt werden. Durch diese Maßnahme kann das leitungsförmige Bauteil 9 in Axialrichtung in der Verbindungsvorrichtung 1 gesichert werden. Insbesondere kann vorgesehen sein, dass die Fixiernase 14 im verbauten Zustand im leitungsförmigen Bauteil 9 verhakt bzw. verkrallt ist und somit bei einem Axialzug des leitungsförmigen Bauteils 9 in Richtung des ersten Längsendes 17 des Grundkörpers 2 eine Selbsthemmung erreicht wird.

Wenn die Spannzange 7 in den Grundkörper 2 in Axialrichtung hineinverschoben wird, können sich die Spannelemente 12 in Radialrichtung nach außen bewegen, wodurch die Fixiernase 14 vom leitungsförmigen Bauteil 9 außer Eingriff gebracht werden kann und somit das leitungsförmige Bauteil 9 zum Herausziehen aus der Verbindungsvorrichtung 1 freigegeben sein kann. Die Spannzange 7 kann darüber hinaus einen Führungsabschnitt 18 aufweisen, mittels welchem die Spannzange 7 in Axialrichtung verschiebbar im Spannzangenaufnahmebereich 5 des Grundkörpers 2 gehalten sein kann. Darüber hinaus kann die Spannzange 7 eine Anschlagschulter 19 aufweisen, welche zur Begrenzung der axialen Verschiebbarkeit der Spannzange 7 relativ zum Grundkörper 2 dient. Wie aus Fig. 1 weiters ersichtlich, kann die Anschlagschulter 19 gegenüber dem ersten Längsende 17 des Grundkörpers 2 vorstehend ausgebildet sein. Weiters kann die Anschlagschulter 19 gleichzeitig als Betätigungselement zum Verschieben der Spannzange 7 in Axialrichtung und somit zum Lösen des leitungsförmigen Bauteiles 9 dienen. Insbesondere kann die Spannzange 7 im Bereich der Anschlagschulter 19 gegriffen werden bzw. kann vom Benutzer an die Anschlagschulter 19 angedrückt werden, um die Spannzange 7 zu verschieben.

Im Dichtungsaufnahmebereich 4 kann ein Dichtungselement 20 aufgenommen sein. Das Dichtungselement 20 kann einen Dichtungselementdurchmesser 21 aufweisen. Insbesondere kann vorgesehen sein, dass der Dichtungselementdurchmesser 21 2,5 mm beträgt. Weiters kann vorgesehen sein, dass das Dichtungselement 20 aus einem gummiartigen Material gebildet ist.

Weiters kann vorgesehen sein, dass der Dichtungsaufnahmebereich 4 des Grundkörpers 2 eine Dichtungselementstirnfläche 22 aufweist, welche zur axialen Positionierung des Dichtungselementes 20 dient.

Weiters kann vorgesehen sein, dass der Dichtungsaufnahmebereich 4 eine Dichtungselementmantelfläche 23 aufweist, welche zur radialen Positionierung des Dichtungselementes 20 dient. In der Darstellung nach Fig. 1 ist das Dichtungselement 20 zur Veranschaulichung in seiner unbelasteten Form dargestellt. Der Vollständigkeit halber wird darauf hingewiesen, dass das Dichtungselement 20 im verbauten Zustand entgegen der Darstellung nach Fig. 1 eigentlich an der Dichtungselementmantelfläche 23 anliegt und daher dementsprechend in dessen Gesamtdurchmesser verformt ist. Insbesondere kann vorgesehen sein, dass im gesteckten Zustand des leitungsförmigen Bauteiles 9 mit der Verbindungsvorrichtung 1 das Dichtungselement 20 sowohl an der Außenmantelfläche des leitungsförmigen Bauteiles 9, als auch an der Dichtungselementmantelfläche 23 anliegt und seine Dichtwirkung gegenüber diesen Flächen entfaltet.

Weiters kann vorgesehen sein, dass im Grundkörper 2 ein erster Axialanschlag 24 ausgebildet ist, welcher zur Aufnahme eines leitungsförmigen Bauteiles 9 mit einem ersten Leitungsdurchmesser 10 dient. Der erste Axialanschlag 24 kann eine erste zylindrische Mantelfläche 25 aufweisen, welche mit dem Leitungsdurchmesser 10 korrespondiert. Insbesondere kann vorgesehen sein, dass die erste zylindrische Mantelfläche 25 einen ersten Axialanschlagdurchmesser 26 aufweist. Weiters kann vorgesehen sein, dass der erste Axialanschlag 24 eine erste Stirnfläche 27 aufweist.

Weiters kann vorgesehen sein, dass ein zweiter Axialanschlag 28 ausgebildet ist, welcher eine zweite zylindrische Mantelfläche 29 aufweist. Die zweite zylindrische Mantelfläche 29 kann einen zweiten Axialanschlagdurchmesser 30 aufweisen. Weiters kann vorgesehen sein, dass im zweiten Axialanschlag 28 eine zweite Stirnfläche 31 ausgebildet ist.

Wie aus Fig. 1 gut ersichtlich, kann vorgesehen sein, dass der zweite Axialanschlagdurchmesser 30 kleiner ist als der erste Axialanschlagdurchmesser 26.

Die erste Stirnfläche 27 und die zweite Stirnfläche 31 können in einem Stirnflächenabstand 32 zueinander angeordnet sein. Weiters kann vorgesehen sein, dass der erste Axialanschlag 24 eine erste Axialanschlagslängenerstreckung 33 aufweist. Der zweite Axialanschlag 28 kann eine zweite Axialanschlagslängenerstreckung 34 aufweisen.

Wie aus Fig. 1 ersichtlich, kann vorgesehen sein, dass die zweite Axialanschlagslängenerstreckung 34 und der Stirnflächenabstand 32 gleich groß sind.

Wie aus Fig. 1 weiters ersichtlich, kann vorgesehen sein, dass die erste Stirnfläche 27 in einem ersten Winkel 35 zur Mittelachse 6 angeordnet ist. Weiters kann vorgesehen sein, dass die zweite Stirnfläche 31 in einem zweiten Winkel 36 zur Mittelachse 6 angeordnet ist. Wie aus Fig. 1 weiters ersichtlich, kann vorgesehen sein, dass der Dichtungsaufnahmebereich 4 eine Dichtungsaufnahmehöhe 37 aufweist. Die Dichtungsaufnahmehöhe 37 kann sich berechnen aus einem Dichtungsaufnahmedurchmesser 38 der Dichtungselementmantelfläche minus dem ersten Axialanschlagdurchmesser 26 durch 2. Mathematisch: (Dichtungsaufnahmedurchmesser 38 - erster Axialanschlagdurchmesser 26)/2

Wie aus Fig. 1 weiters ersichtlich, kann vorgesehen sein, dass der Grundkörper 2 an einem zweiten Längsende 39 einen Einschraubbereich 40 aufweist, an welchem ein Außengewinde ausgebildet sein kann. Mittels des Einschraubbereiches 40 kann die Verbindungsvorrichtung 1 in einer entsprechenden Gewindebohrung aufgenommen bzw. fixiert sein. Weiters kann vorgesehen sein, dass im Einschraubbereich 40 eine Einschraubdichtung 41 ausgebildet ist.

Wie aus Fig. 1 weiters ersichtlich, kann vorgesehen sein, dass der Grundkörper 2 eine sich vom ersten Längsende 17 bis zum zweiten Längsende 39 erstreckende Durchgangsöffnung aufweisen kann, durch welche ein Fluid hindurchströmen kann.

Weiters kann vorgesehen sein, dass die Spannschräge 15 einen Spannschrägen-öffnungswinkel 42 aufweist.

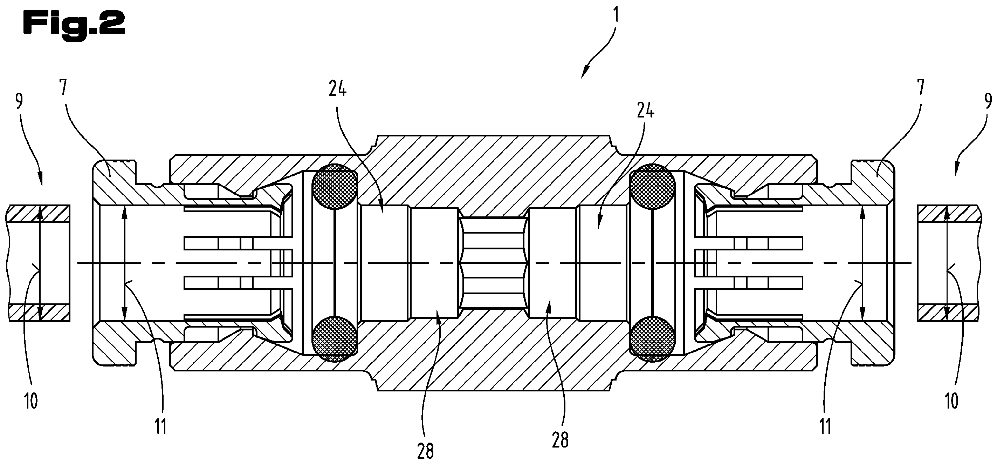

In der Fig. 2 ist eine weitere und gegebenenfalls für sich eigenständige Ausführungsform der Verbindungsvorrichtung 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Wie aus Fig. 2 ersichtlich, kann vorgesehen sein, dass die Verbindungsvorrichtung 1 nicht wie im Ausführungsbeispiel nach Fig. 1 zum Einschrauben in einen Bauteil dient, sondern dass die Verbindungsvorrichtung 1 an beiden Seiten eine Spannzange 7 aufweist. Die Verbindungsvorrichtung 1 kann bezüglich einer Längsmittelebene symmetrisch ausgebildet sein und somit an beiden Seiten zur Aufnahme eines leitungsförmigen Bauteils 9 dienen.

Beide Seiten der Verbindungsvorrichtung 1, wie sie in Fig. 2 dargestellt ist, können entsprechend den Ausführungen nach Fig. 1 ausgebildet sein. Insbesondere kann vorgesehen sein, dass an beiden Seiten des Grundkörpers 2 der erste Axialanschlag 24 und der zweite Axialanschlag 28 ausgebildet sind und die Verbindungsvorrichtung 1 somit an beiden Seiten zur Aufnahme von leitungsförmigen Bauteilen 9 mit variablen Leitungsdurchmessern 10 dienen kann.

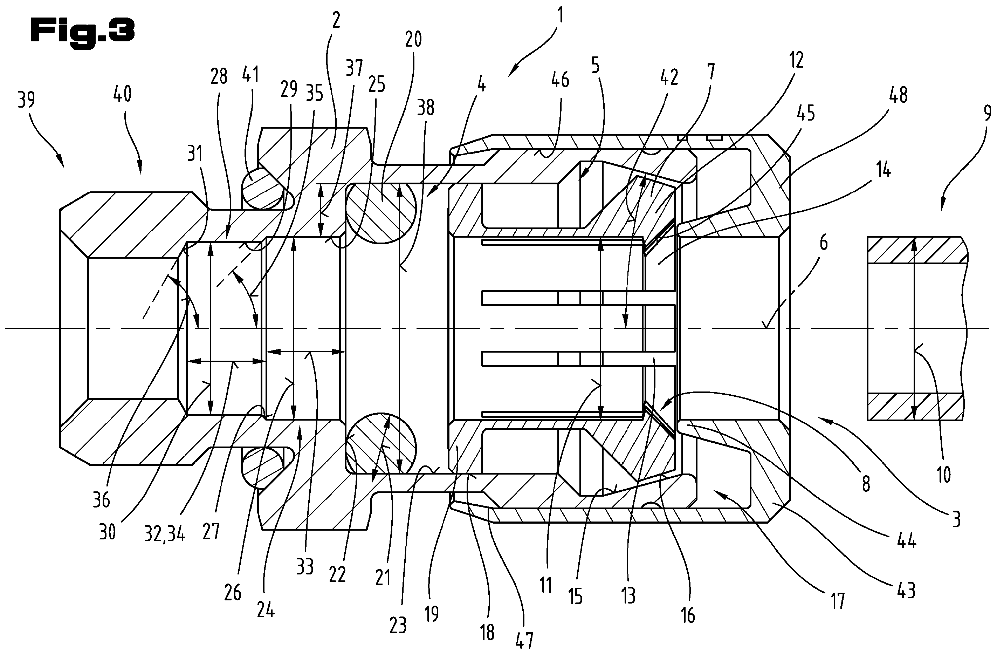

In der Fig. 3 ist eine weitere und gegebenenfalls für sich eigenständige Ausführungsform der Verbindungsvorrichtung 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Wie aus Fig. 3 ersichtlich, kann vorgesehen sein, dass im unbetätigten Zustand die Spannelementschräge 16 parallel zur Spannschräge 15 angeordnet ist.

Wie im alternativen Ausführungsbeispiel nach Fig. 3 weiters ersichtlich, kann vorgesehen sein, dass ein Spannzangenöffner 43 ausgebildet ist. der Spannzangenöffner 43 kann als von der Spannzange 7 separates Bauteil ausgebildet sein. Insbesondere kann vorgesehen sein, dass der Spannzangenöffner mit den Spannelementen 12 korrespondiert. Insbesondere kann vorgesehen sein, dass der Spannzangenöffner 43 einen Betätigungsbereich 44 aufweist, welcher zur Anlage an einer Öffenschräge 45 der Spannelemente 12 dient.

Bei einer Axialverschiebung des Spannzangenöffners 43 relativ zur Spannzange 7, insbesondere zur Spannzange 7 hin, können die Spannelemente 12 vom Betätigungsbereich 44 des Spannzangenöffners 43 nach außen gedrückt werden, sodass die Fixiernasen 14 außer Eingriff mit einem etwaig in der Verbindungsvorrichtung 1 aufgenommenen leitungsförmigen Bauteil 9 gebracht werden können. Somit kann das leitungsförmige Bauteil 9 aus der Verbindungsvorrichtung entfernt werden.

Zur Führung der axialen Verschiebung kann der Spannzangenöffner 43 einen Führungsbereich 46 aufweisen. Der Führungsbereich 46 kann außenliegend um den Grundkörper 2 angeordnet sein. Insbesondere kann vorgesehen sein, dass der Führungsbereich 46 des Spannzangenöffners 43 den Grundkörper 2 hülsenförmig umgibt.

Weiters kann vorgesehen sein, dass der Führungsbereich 46 an einem vom Spannzangenöffner 43 abgewandten Längsende eine zur Mittelachse 6 gezogene Kröpfung 47 aufweist.

Außerdem kann vorgesehen sein, dass der Spannzangenöffner 43 eine erste Stirnwand 48 aufweist, welche den Führungsbereich 46 mit dem Betätigungsbereich 44 verbindet.

In Fig. 3 ist die Verbindungsvorrichtung 1 in ihrer Ruhestellung dargestellt, in welcher sich die einzelnen Spannelemente 12 in ihrer Ruhestellung befinden. Hierbei können die Spannelemente 12 bei einem eingesetzten leitungsförmigen Bauteil 9 mit diesem in Eingriff stehen bzw. kann das leitungsförmige Bauteil 9 in die Verbindungsvorrichtung 1 eingeschoben werden. Wenn in einer Lage der Verbindungsvorrichtung 1 entsprechend der Darstellung nach Fig. 3 der Spannzangenöffner 43 nach links verschoben wird, so kann der Spannzangenöffner 43 an der Öffenschräge 45 zur Anlage kommen. Bei einem weiteren Verschieben des Spannzangenöffners 43 nach links werden die Spannelemente 12 durch den Betätigungsbereich 44 nach außen gedrückt, wodurch sie elastisch verformt werden. Hierbei kann die Spannelementschräge 16 an der Spannschräge 15 zur Anlage kommen.

Wenn der Spannzangenöffner 43 losgelassen wird, so können sich die Spannelemente 12 durch die Federkraft der elastischen Verformung wieder nach innen verschieben. Bei Vorhandensein eines leitungsförmigen Bauteiles 9 können sich hierbei die Fixiernasen 14 formschlüssig in das leitungsförmige Bauteil 9 eindrücken und dieses plastisch verformen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenliste

| | | | |
|---|---|---|---|
| 1 | Verbindungsvorrichtung | 26 | erster Axialanschlagdurch-messer |
| 2 | Grundkörper | | |
| 3 | Schlauchaufnahmebereich | 27 | erste Stirnfläche |
| 4 | Dichtungsaufnahmebereich | 28 | zweiter Axialanschlag |
| 5 | Spannzangenaufnahmebe- reich | 29 | zweite zylindrische Mantelfläche |
| 6 | Mittelachse | 30 | zweiter Axialanschlagdurch-messer |
| 7 | Spannzange | | |
| 8 | Anschlussöffnung | 31 | zweite Stirnfläche |
| 9 | leitungsförmiges Bauteil | 32 | Stirnflächenabstand |
| 10 | Leitungsdurchmesser | 33 | erste Axialanschlagslängener-streckung |
| 11 | Anschlussöffnungsdurchmes- ser | | |
| | | 34 | zweite Axialanschlagslängen-erstreckung |
| 12 | Spannelement | | |
| 13 | Spannelementfreiraum | 35 | erster Winkel |
| 14 | Fixiernase | 36 | zweiter Winkel |
| 15 | Spannschräge | 37 | Dichtungsaufnahmehöhe |
| 16 | Spannelementschräge | 38 | Dichtungsaufnahmedurch-messer |
| 17 | erstes Längsende | | |
| 18 | Führungsabschnitt | 39 | zweites Längsende |
| 19 | Anschlagschulter | 40 | Einschraubbereich |
| 20 | Dichtungselement | 41 | Einschraubdichtung |
| 21 | Dichtungselementdurchmes- ser | 42 | Spannschrägenöffnungswinkel |
| 22 | Dichtungselementstirnfläche | 43 | Spannzangenöffner |
| 23 | Dichtungselementmantelflä- che | 44 | Betätigungsbereich |
| | | 45 | Öffenschräge |
| 24 | erster Axialanschlag | 46 | Führungsbereich |
| 25 | erste zylindrische Mantelflä- che | 47 | Kröpfung |
| | | 48 | erste Stirnwand |

## Patentansprüche

1. Verbindungsvorrichtung (1) umfassend:
- einen Grundkörper (2) mit einem Schlauchaufnahmebereich (3), wobei im Schlauchaufnahmebereich (3) ein Dichtungsaufnahmebereich (4) ausgebildet ist und wobei im Schlauchaufnahmebereich (3) ein Spannzangenaufnahmebereich (5) ausgebildet ist;
- eine Spannzange (7) mit einer Anschlussöffnung (8) zur Aufnahme eines leitungsförmigen Bauteils (9), wobei die Anschlussöffnung (8) einen Anschlussöffnungsdurchmesser (11) aufweist, wobei die Spannzange (7) mehrere über den Umfang verteilt ausgebildete elastisch federnde Spannelemente (12) aufweist, wobei die Spannzange (7) relativ zum Grundkörper (2) in Axialrichtung verschiebbar im Spannzangenaufnahmebereich (5) aufgenommen ist, wobei die Spannelemente (12) durch Axialverschiebung der Spannzange (7) relativ zum Grundkörper (2) in Radialrichtung verlagerbar sind;
- ein Dichtungselement (20), welches im Dichtungsaufnahmebereich (4) angeordnet ist und zur Abdichtung zwischen dem leitungsförmigen Bauteil (9) und dem Grundkörper (2) dient, wobei im Grundkörper (2) ein erster Axialanschlag (24) ausgebildet ist, welcher eine erste zylindrische Mantelfläche (25) mit einem ersten Axialanschlagdurchmesser (26) aufweist und ein zweiter Axialanschlag (28) ausgebildet ist, welcher eine zweite zylindrische Mantelfläche (29) mit einem zweiten Axialanschlagdurchmesser (30) aufweist,
**dadurch gekennzeichnet, dass** der erste Axialanschlag (24) zum Anschlag einer ersten Art des leitungsförmigen Bauteiles (9) mit einem ersten Leitungsdurchmesser (10) dient und der zweite Axialanschlag (28) zum Anschlag einer zweiten Art des leitungsförmigen Bauteiles (9) mit einem zweiten Leitungsdurchmesser (10) dient, wobei der erste Axialanschlag (24) eine erste Stirnfläche (27) aufweist und der zweite Axialanschlag (28) eine zweite Stirnfläche (31) aufweist, wobei die erste Stirnfläche (27) und die zweite Stirnfläche (31) in Axialrichtung in einem Stirnflächenabstand (32) beabstandet zueinander angeordnet sind, wodurch die Verbindungsvorrichtung (1) zur Aufnahme von leitungsförmigen Bauteilen (9) mit unterschiedlichen Leitungsdurchmessern (10) ausgebildet ist.

2. Verbindungsvorrichtung (1) nach Anspruch 1, **dadurch gekennzeichnet, dass** der zweite Axialanschlagdurchmesser (30) zwischen 87% und 99,9%, insbesondere zwischen 92% und 98%, bevorzugt zwischen 93,5% und 94,5% des Anschlussöffnungsdurchmessers (11) beträgt.

3. Verbindungsvorrichtung (1) nach einem der Ansprüche 1 oder 2, **dadurch gekennzeichnet, dass** der erste Axialanschlag (24) eine erste Axialanschlagslängenerstreckung (33) aufweist und dass der zweite Axialanschlag (28) eine zweite Axialanschlagslängenerstreckung (34) aufweist, wobei die erste Axialanschlagslängenerstreckung (33) zwischen 90% und 110%, insbesondere zwischen 95% und 105%, bevorzugt zwischen 98% und 102% der zweiten Axialanschlagslängenerstreckung (34) beträgt.

4. Verbindungsvorrichtung (1) nach einem der vorhergehenden Ansprüche, **dadurch gekennzeichnet, dass** das Dichtungselement (20) einen Dichtungselementdurchmesser (21) aufweist, wobei der Dichtungselementdurchmesser (21) zwischen 25% und 55%, insbesondere zwischen 30% und 45%, bevorzugt zwischen 37% und 43% des Anschlussöffnungsdurchmessers (11) beträgt.

5. Verbindungsvorrichtung (1) nach einem der vorhergehenden Ansprüche, **dadurch gekennzeichnet, dass** das Dichtungselement (20) eine Härte zwischen 30 Shore-A und 75 Shore-A, insbesondere zwischen 40 Shore-A und 60 Shore-A, bevorzugt zwischen 47 Shore-A und 53 Shore-A aufweist.

6. Verbindungsvorrichtung (1) nach Anspruch 1, **dadurch gekennzeichnet, dass** die erste Stirnfläche (27) in einem ersten Winkel (35) zu einer Mittelachse (6) angeordnet ist und dass die zweite Stirnfläche (31) in einem zweiten Winkel (36) zur Mittelachse (6) angeordnet ist, wobei der erste Winkel (35) und/oder der zweite Winkel (36) zwischen 30° und 89°, insbesondere zwischen 30° und 70°, bevorzugt zwischen 40° und 60° beträgt.

7. Verbindungsvorrichtung (1) nach einem der vorhergehenden Ansprüche, **dadurch gekennzeichnet, dass** das Dichtungselement (20) einen Dichtungselementdurchmesser (21) aufweist und dass der Dichtungsaufnahmebereich (4) eine Dichtungsaufnahmehöhe (37) aufweist, wobei die Dichtungsaufnahmehöhe (37) zwischen 50% und 90%, insbesondere zwischen 65% und 85%, bevorzugt zwischen 75% und 80% des Dichtungselementdurchmessers (21) beträgt.

8. Verbindungsvorrichtung (1) nach einem der vorhergehenden Ansprüche, **dadurch gekennzeichnet, dass** eine Spannschräge (15) einen Spannschrägenöffnungswinkel (42) zwischen 10° und 45°, insbesondere zwischen 12° und 30°, bevorzugt zwischen 14° und 20° aufweist.

9. Verbindungsvorrichtung (1) nach einem der vorhergehenden Ansprüche, **dadurch gekennzeichnet, dass** ein Spannzangenöffner (43) ausgebildet ist, welcher mit den Spannelementen (12) korrespondiert, wobei der Spannzangenöffner (43) relativ zur Spannzange (7) verschiebbar ist und wobei der Spannzangenöffner (43) einen Betätigungsbereich (44) aufweist, welcher zur Anlage an einer Öffenschräge (45) der Spannelemente (12) ausgebildet ist.

10. Verbindungsvorrichtung (1) nach Anspruch 9, **dadurch gekennzeichnet, dass** der Spannzangenöffner (43) einen Führungsbereich (46) aufweist, welcher außenliegend um den Grundkörper (2) angeordnet ist und zur axial geführten Verschiebung am Grundkörper (2) ausgebildet ist.

11. Verbindungsvorrichtung (1) nach Anspruch 10, **dadurch gekennzeichnet, dass** der Führungsbereich (46) an einem vom Spannzangenöffner (43) abgewandten Längsende eine zur Mittelachse (6) gezogene Kröpfung (47) aufweist.

12. Verbindungsvorrichtung (1) nach einem der Ansprüche 10 bis 11, **dadurch gekennzeichnet, dass** der Spannzangenöffner (43) eine erste Stirnwand (48) aufweist, welche den Führungsbereich (46) mit dem Betätigungsbereich (44) verbindet.

## Claims

1. A connection device (1) comprising:
- a base body (2) with a hose-receiving region (3), wherein a seal-receiving region (4) is formed in the hose-receiving region (3) and wherein a collet-chuck-receiving region (5) is formed in the hose-receiving region (3);
- a collet chuck (7) with a connection opening (8) for receiving a line-shaped component (9), the connection opening (8) having a connection opening diameter (11), the collet chuck (7) having a plurality of elastically resilient clamping elements (12) distributed over the circumference, the collet chuck (7) being received in the collet-chuck-receiving region (5) so as to be displaceable in the axial direction relative to the base body (2), the clamping elements (12) being displaceable in the radial direction by axial displacement of the collet chuck (7) relative to the base body (2);
- a sealing element (20), which is arranged in the seal-receiving region (4) and forms a seal between the line-shaped component (9) and the base body (2), a first axial stop (24) being formed in the base body (2), having a first cylindrical lateral surface (25) with a first axial stop diameter (26), and a second axial stop (28) being formed, having a second cylindrical lateral surface (29) with a second axial stop diameter (30), **characterized in that** the first axial stop (24) stops first type of the line-shaped component (9) with a first line diameter (10) and the second axial stop (28) stops a second type of the line-shaped component (9) with a second line diameter (10),
wherein the first axial stop (24) has a first end face (27) and the second axial stop (28) has a second end face (31), wherein the first end face (27) and the second end face (31) are arranged spaced apart from one another in the axial direction at an end face distance (32), such that the connection device (1) is configured to receive line-shaped components (9) with different line diameters (10).

2. The connection device (1) according to Claim 1, **characterized in that** the second axial stop diameter (30) is between 87% and 99.9%, in particular between 92% and 98%, preferably between 93.5% and 94.5% of the connection opening diameter (11).

3. The connection device (1) according to one of the Claims 1 or 2, **characterized in that** the first axial stop (24) has a first axial stop longitudinal extension (33) and that the second axial stop (28) has a second axial stop longitudinal extension (34), wherein the first axial stop longitudinal extension (33) is between 90% and 110%, in particular between 95% and 105%, preferably between 98% and 102% of the second axial stop longitudinal extension (34).

4. The connection device (1) according to one of the preceding Claims, **characterized in that** the sealing element (20) has a sealing element diameter (21), wherein the sealing element diameter (21) is between 25% and 55%, in particular between 30% and 45%, preferably between 37% and 43% of the connection opening diameter (11).

5. The connection device (1) according to one of the preceding Claims, **characterized in that** the sealing element (20) has a hardness between 30 Shore A and 75 Shore A, in particular between 40 Shore A and 60 Shore A, preferably between 47 Shore A and 53 Shore A.

6. The connection device (1) according to Claim 1, **characterized in that** the first end face (27) is arranged at a first angle (35) to a central axis (6) and that the second end face (31) is arranged at a second angle (36) to the central axis (6), wherein the first angle (35) and/or the second angle (36) is between 30° and 89°, in particular between 30° and 70°, preferably between 40° and 60°.

7. The connection device (1) according to one of the preceding Claims, **characterized in that** the sealing element (20) has a sealing element diameter (21) and that the seal-receiving region (4) has a seal-receiving height (37), wherein the seal-receiving height (37) is between 50% and 90%, in particular between 65% and 85%, preferably between 75% and 80% of the sealing element diameter (21).

8. The connection device (1) according to one of the preceding Claims, **characterized in that** a clamping bevel (15) has a clamping bevel opening angle (42) between10° and 45°, in particular between 12° and 30°, preferably between 14° and 20°.

9. The connection device (1) according to one of the preceding Claims, **characterized in that** a collet chuck opener (43) is formed, which corresponds to the clamping elements (12), wherein the collet chuck opener (43) is displaceable relative to the collet chuck (7), and wherein the collet chuck opener (43) has an actuating region (44), which is configured to bear against an opening bevel (45) of the clamping elements (12).

10. The connection device (1) according to Claim 9, **characterized in that** the collet chuck opener (43) has a guide region (46), which is arranged on the outside around the base body (2) and is configured for axially guided displacement on the base body (2).

11. The connection device (1) according to Claim 10, **characterized in that** the guide region (46) has an offset (47) drawn towards the central axis (6) at a longitudinal end facing away from the collet chuck opener (43).

12. The connection device (1) according to one of the Claims 10 to 11, **characterized in that** the collet chuck opener (43) has a first end wall (48), which connects the guide region (46) to the actuating region (44).

## Revendications

1. Dispositif de liaison (1) comprenant :
- un corps de base (2) avec une zone de logement de tuyau (3), une zone de logement de joint (4) étant formée dans la zone de logement de tuyau (3) et une zone de logement de pince de serrage (5) étant formée dans la zone de logement de tuyau (3) ;
- une pince de serrage (7) avec une ouverture de raccordement (8) pour recevoir un composant en forme de conduite (9), l'ouverture de raccordement (8) présentant un diamètre d'ouverture de raccordement (11), la pince de serrage (7) présentant plusieurs éléments de serrage (12) élastiques et répartis sur la circonférence, la pince de serrage (7) étant logée dans la zone de logement de pince de serrage (5) de manière à pouvoir être déplacée dans le sens axial par rapport au corps de base (2), les éléments de serrage (12) pouvant être déplacés dans le sens radial par un déplacement axial de la pince de serrage (7) par rapport au corps de base (2) ;
- un élément d'étanchéité (20), qui est disposé dans la zone de logement de joint (4) et sert à assurer l'étanchéité entre le composant en forme de conduite (9) et le corps de base (2), une première butée axiale (24) étant formée dans le corps de base (2), qui présente une première surface d'enveloppe cylindrique (25) avec un premier diamètre de butée axiale (26) et une deuxième butée axiale (28) qui présente une deuxième surface d'enveloppe cylindrique (29) avec un deuxième diamètre de butée axiale (30),
**caractérisé en ce que** la première butée axiale (24) sert à buter contre un premier type de composant en forme de conduite (9) ayant un premier diamètre de conduite (10) et la deuxième butée axiale (28) sert à buter contre un deuxième type de composant en forme de conduite (9) ayant un deuxième diamètre de conduite (10), la première butée axiale (24) présentant une première surface frontale (27) et la deuxième butée axiale (28) présentant une deuxième surface frontale (31), la première surface frontale (27) et la deuxième surface frontale (31) étant espacées l'une de l'autre dans la direction axiale d'une distance frontale (32), le dispositif de liaison (1) étant ainsi conçu pour recevoir des composants en forme de conduite (9) ayant différents diamètres de conduite (10).

2. Dispositif de liaison (1) selon la revendication 1, **caractérisé en ce que** le deuxième diamètre de butée axiale (30) est compris entre 87 % et 99,9 %, en particulier entre 92 % et 98 %, de préférence entre 93,5 % et 94,5 % du diamètre d'ouverture du raccordement (11).

3. Dispositif de liaison (1) selon l'une des revendications 1 ou 2, **caractérisé en ce que** la première butée axiale (24) présente une première longueur de butée axiale (33) et **en ce que** la deuxième butée axiale (28) présente une deuxième longueur de butée axiale (34), la première longueur de butée axiale (33) étant comprise entre 90 % et 110 %, en particulier entre 95 % et 105 %, de préférence entre 98 % et 102 % de la deuxième longueur de butée axiale (34).

4. Dispositif de liaison (1) selon l'une des revendications précédentes, **caractérisé en ce que** l'élément d'étanchéité (20) présente un diamètre d'élément d'étanchéité (21), le diamètre d'élément d'étanchéité (21) étant compris entre 25 % et 55 %, en particulier entre 30 % et 45 %, de préférence entre 37 % et 43 % du diamètre d'ouverture de raccordement (11).

5. Dispositif de liaison (1) selon l'une des revendications précédentes, **caractérisé en ce que** l'élément d'étanchéité (20) présente une dureté comprise entre 30 Shore A et 75 Shore A, en particulier entre 40 Shore A et 60 Shore A, de préférence entre 47 Shore A et 53 Shore A.

6. Dispositif de liaison (1) selon la revendication 1, **caractérisé en ce que** la première surface frontale (27) est disposée selon un premier angle (35) par rapport à un axe médian (6) et **en ce que** la deuxième surface frontale (31) est disposée selon un deuxième angle (36) par rapport à l'axe médian (6), le premier angle (35) et/ou le deuxième angle (36) étant compris entre 30° et 89°, en particulier entre 30° et 70°, de préférence entre 40° et 60°.

7. Dispositif de liaison (1) selon l'une des revendications précédentes, **caractérisé en ce que** l'élément d'étanchéité (20) présente un diamètre d'élément d'étanchéité (21) et **en ce que** la zone de logement de joint (4) présente une hauteur de réception de joint (37), la hauteur de réception de joint (37) étant comprise entre 50 % et 90 %, en particulier entre 65 % et 85 %, de préférence entre 75 % et 80 % du diamètre de l'élément d'étanchéité (21).

8. Dispositif de liaison (1) selon l'une des revendications précédentes, **caractérisé en ce qu'**une surface de serrage inclinée (15) présente un angle d'ouverture de la surface de serrage inclinée (42) compris entre 10° et 45°, en particulier entre 12° et 30°, de préférence entre 14° et 20°.

9. Dispositif de liaison (1) selon l'une des revendications précédentes, **caractérisé en ce qu'**un dispositif d'ouverture de pince de serrage (43) est formé, qui correspond aux éléments de serrage (12), le dispositif d'ouverture de pince de serrage (43) étant déplaçable par rapport à la pince de serrage (7) et le dispositif d'ouverture de pince de serrage (43) présentant une zone d'actionnement (44) qui est conçue pour venir en appui contre un biseau d'ouverture (45) des éléments de serrage (12).

10. Dispositif de liaison (1) selon la revendication 9, **caractérisé en ce que** le dispositif d'ouverture de pince de serrage (43) présente une zone de guidage (46) qui est disposée à l'extérieur autour du corps de base (2) et qui est conçue pour un déplacement axial guidé sur le corps de base (2).

11. Dispositif de liaison (1) selon la revendication 10, **caractérisé en ce que** la zone de guidage (46) présente, à une extrémité longitudinale opposée au dispositif d'ouverture de pince de serrage (43), un coude (47) tiré vers l'axe médian (6).

12. Dispositif de liaison (1) selon l'une des revendications 10 à 11, **caractérisé en ce que** le dispositif d'ouverture de la pince de serrage (43) présente une première paroi frontale (48) qui relie la zone de guidage (46) à la zone d'actionnement (44).
